# EUROPÄISCHE PATENTSCHRIFT

(11) **EP 3 743 634 B1**
(45) Veröffentlichungstag und Bekanntmachung des Hinweises auf die Patenterteilung: **08.02.2023**
(21) Anmeldenummer: 18829199.1
(22) Anmeldetag: 17.12.2018
(51) Int. Cl.: F16D 13/62, F16D 11/14, F16D 13/70, F16D 13/52, F16D 13/58, F16D 21/06, F16D 13/68

(54) **MEHRFACHKUPPLUNG MIT GEBERTEIL ZUR DREHZAHLERFASSUNG; UND KUPPLUNGSANORDNUNG MIT MEHRFACHKUPPLUNG SOWIE ZWEIMASSENSCHWUNGRAD**
MULTIPLE CLUTCH WITH ENCODER PART FOR ROTATIONAL SPEED DETECTION; AND CLUTCH ARRANGEMENT WITH MULTIPLE CLUTCH AND DUAL-MASS FLYWHEEL
EMBRAYAGE MULTIPLE MUNI D'UN ÉLÉMENT ÉMETTEUR DÉTECTANT LA VITESSE DE ROTATION, ET SYSTÈME D'EMBRAYAGE COMPORTANT UN EMBRAYAGE MULTIPLE ET UN VOLANT BIMASSE

(30) Priorität: 23.01.2018 DE 102018101460; 10.04.2018 DE 102018108396
(43) Veröffentlichungstag der Anmeldung: 02.12.2020
(73) Patentinhaber: Schaeffler Technologies AG & Co. KG, 91074 Herzogenaurach (DE)
(72) Erfinder: KREBS, Florian, 77886 Lauf (DE); BÄR, Tobias, 77855 Achern (DE); FINK, Jasper, 77880 Sasbach (DE); BILLMANN, Franck, 67250 Hunspach (FR); BAUER, Tobias, 77855 Achern (DE); NÖHL, Oliver, 77830 Bühlertal (DE); JAKOWSKI, Robert, 76547 Sinzheim (DE)
(86) Internationale Anmeldenummer: PCT/DE2018/101025
(87) Internationale Veröffentlichungsnummer: WO 2019/144983

(56) Entgegenhaltungen:
- EP-A2- 1 882 866
- DE-U1- 20 320 469
- FR-A1- 2 894 309

## Beschreibung

Die Erfindung betrifft eine Mehrfachkupplung für einen Antriebsstrang eines Kraftfahrzeuges, wie eines Pkws, Lkws, Busses oder sonstigen Nutzfahrzeuges, mit einer ersten Kupplung und einer zweiten Kupplung, wobei jede (sowohl die erste als auch die zweite) Kupplung einen ersten Kupplungsbestandteil sowie einen, wahlweise mit dem ersten Kupplungsbestandteil drehverbindbaren, zweiten Kupplungsbestandteil aufweist, sowie mit einem eine Drehzahl- und/oder Drehpositionserfassungsgeometrie aufweisenden, mit einem Sensor in Wirkverbindung stehenden Geberteil. Zudem betrifft die Erfindung eine Kupplungsanordnung mit dieser Mehrfachkupplung sowie einem Zweimassenschwungrad.

Gattungsgemäßer Stand der Technik ist bspw. aus der DE 10 2017 102 733 A1 bekannt. Hierin ist eine Drehmomentübertragungseinrichtung mit Mitnehmerring offenbart. Der Mitnehmerring ist hierbei Bestandteil des Schwungrades.

Als weiterer Stand der Technik wird auf die FR 2 894 309 A1 und die EP 1 882 866 A2 verwiesen, welche eine Einzelkupplung aufweisen, wobei an einem Kupplungsbestandteil der Einzelkupplung eine Geberkontur angeordnet ist.

Bei den aus dem Stand der Technik bekannten Ausführungen hat es sich als Nachteil herausgestellt, dass die umgesetzten Mehrfachkupplungen entweder relativ aufwändig sowie großbauend umgesetzt sind oder, dass das Geberteil, bei Anordnung des Geberteils seitens eines Zweimassenschwungrades außerhalb der Mehrfachkupplung, zum Erzeugen unzuverlässiger Messdaten beiträgt.

Es ist daher die Aufgabe der vorliegenden Erfindung, die aus dem Stand der Technik bekannten Nachteile zu beheben und insbesondere eine Mehrfachkupplung zur Verfügung zu stellen, die einen vereinfachten Aufbau sowie eine möglichst kompakte Ausbildung aufweist, wobei zugleich eine verlässliche Erfassung eines Dreh- / Rotationszustandes ermöglicht wird.

Dies wird erfindungsgemäß dadurch gelöst, dass das Geberteil als ein den ersten Kupplungsbestandteil der ersten Kupplung mit dem ersten Kupplungsbestandteil der zweiten Kupplung (unmittelbar) drehfest verbindendes Verbindungselement eingesetzt ist.

Dadurch wird ein ohnehin vorgesehenes Element unmittelbar als Geberteil ausgebildet und der Aufbau der Mehrfachkupplung deutlich vereinfacht. Insbesondere ergibt sich dadurch eine in axialer Richtung noch kompaktere Ausbildung der Mehrfachkupplung. Zudem, durch die Integration des Geberteils in die Mehrfachkupplung, ist der Dreh- / Rotationszustand der ersten Kupplungsbestandteiles der ersten und zweiten Kupplung verlässlich erfassbar.

Weitere vorteilhafte Ausführungsformen sind mit den Unteransprüchen beansprucht und nachfolgend näher erläutert.

Ist das Geberteil ringförmig / ringscheibenförmig ausgebildet, ist das Geberteil besonders kompakt ausgeformt.

Von Vorteil ist es des Weiteren wenn sich das Geberteil, vorzugsweise direkt in radialer Richtung, zwischen zwei sich in einer axialen Richtung in Bezug auf eine Drehachse der Mehrfachkupplung überdeckenden / überlagernden Verbindungsbereichen der ersten Kupplungsbestandteile der beiden (ersten und zweiten) Kupplungen erstreckt. In anderen Worte ausgedrückt, erstreckt sich das Geberteil somit bevorzugt zwischen einem seitens des ersten Kupplungsbestandteils der ersten Kupplung vorgesehenen ersten Verbindungsbereich und einem seitens des ersten Kupplungsbestandteils der zweiten Kupplung vorgesehenen zweiten Verbindungsbereich, wobei sich der erste Verbindungsbereich und der zweite Verbindungsbereich unmittelbar in der axialen Richtung gegenseitig überdecken / überlagern. Der Bauraumbedarf wird dadurch weiter reduziert.

Diesbezüglich ist es weiterhin zweckmäßig, wenn der erste Kupplungsbestandteil der ersten Kupplung und/oder der erste Kupplungsbestandteil der zweiten Kupplung einen zumindest ein Reibelement, vorzugsweise mehrere Reibelemente, drehfest aufnehmenden (ersten) Träger aufweist und die (ersten) Träger der beiden Kupplungen unmittelbar über das Geberteil miteinander drehfest verbunden sind.

Des Weiteren ist es vorteilhaft, wenn das Geberteil einen die Drehzahl- und/oder Drehpositionserfassungsgeometrie ausbildenden Ringbereich aufweist und der Ringbereich in Bezug auf eine Drehachse der Mehrfachkupplung radial außerhalb des ersten Kupplungsbestandteils der ersten Kupplung und/oder des ersten Kupplungsbestandteils der zweiten Kupplung angeordnet ist. Dadurch ergibt sich eine besonders kompakte radiale Anordnung.

Zweckmäßig ist es auch, wenn die Drehzahl- und/oder Drehpositionserfassungsgeometrie mehrere in regelmäßigen Abständen entlang einer Umfangsrichtung nebeneinander angeordnete Löcher aufweist. Die Löcher sind bevorzugt als Durchgangslöcher ausgebildet. Bevorzugt sind die Löcher zudem in einem geschlossenen Ringbereich umgesetzt, d.h. in axialer Richtung von Stegen des Ringbereiches begrenzt. Dadurch ergibt sich eine besonders geschickte geschlossene Form der Drehzahl- und/oder Drehpositionserfassungsgeometrie.

Alternativ oder zusätzlich ist es zudem vorteilhaft, wenn die Drehzahl- und/oder Drehpositionserfassungsgeometrie mehrere in regelmäßigen Abständen entlang einer Umfangsrichtung nebeneinander angeordnete Zähne / Klauen aufweist. Dadurch wird der Herstellaufwand des Geberteils weiter vereinfacht.

Die Zähne stehen zweckmäßigerweise in Bezug auf die Drehachse in einer axialen Richtung oder einer radialen Richtung nach außen vor. Somit ergibt sich eine besonders geschickte offene Form der Drehzahl- und/oder Drehpositionserfassungsgeometrie, die einen besonders geringen Bauraum einnimmt.

Auch ist es von Vorteil, wenn das Geberteil zumindest ein erstes axiales Durchgangsloch aufweist, in das der erste Kupplungsbestandteil (vorzugsweise mit seinem ersten Träger) der ersten Kupplung unter Ausbildung eines Formschlusses drehfest aufgenommen ist.

Weiterhin ist es zweckmäßig, wenn das Geberteil zumindest ein zweites axiales Durchgangsloch aufweist, in das der erste Kupplungsbestandteil (vorzugsweise mit seinem ersten Träger) der zweiten Kupplung unter Ausbildung eines Formschlusses drehfest aufgenommen ist. Dadurch wird der Montageaufwand reduziert.

Weiterhin ist es von Vorteil, wenn eine auf ein (erstes) Druckelement der ersten Kupplung einwirkende (erste) Rückstellfeder axial zwischen dem ersten Druckelement und dem Geberteil eingespannt ist. Diesbezüglich ist es auch von Vorteil, wenn eine auf ein (zweites) Druckelement der zweiten Kupplung einwirkende (zweite) Rückstellfeder axial zwischen dem zweiten Druckelement und dem Geberteil eingespannt ist.

Hinsichtlich der ersten und zweiten Durchgangslöcher des Geberteils ist es vorteilhaft, wenn die ersten Durchgangslöcher radial versetzt zu den zweiten Durchgangslöchern angeordnet sind. Die ersten Durchgangslöcher sind weiter bevorzugt radial außerhalb der zweiten Durchgangslöcher angeordnet.

Für die Ausbildung der Kupplungen hat es sich weiterhin als zweckmäßig herausgestellt, wenn diese als Reiblamellenkupplungen realisiert sind. Zudem sind Reibelemente der ersten Kupplung bevorzugt radial außerhalb von Reibelementen der zweiten Kupplung angeordnet. Dadurch ergibt sich eine besonders geschickte radiale Schachtelung der Kupplungen und somit eine weitere Reduzierung des benötigten axialen Bauraums.

Die erste Kupplung und die zweite Kupplung sind vorzugsweise als Doppelkupplungseinrichtung umgesetzt sowie weiter bevorzugt nasslaufend ausgebildet. Die Mehrfachkupplung ist ebenfalls gesamtheitlich bevorzugt unmittelbar als Doppelkupplungseinrichtung, weiter bevorzugt als Dreifachkupplungseinrichtung, umgesetzt.

Des Weiteren betrifft die Erfindung eine Kupplungsanordnung mit der erfindungsgemäßen Mehrfachkupplung nach zumindest einer der zuvor beschriebenen Ausführungen und einem Zweimassenschwungrad, wobei ein Primärteil des Zweimassenschwungrads zur drehfesten Verbindung mit einer Ausgangswelle einer Verbrennungskraftmaschine vorbereitet ist und ein mit dem Primärteil drehschwingungsgedämpft verbundenes Sekundärteil mit dem ersten Kupplungsbestandteil der ersten Kupplung und/oder drehfest mit dem ersten Kupplungsbestandteil der zweiten Kupplung drehfest verbunden ist.

In anderen Worten ausgedrückt, ist erfindungsgemäß ein Sensorring / eine Geberkontur (Geberteil) zur Drehzahlmessung in einer (vorzugsweise nassen) Doppelkupplung (Mehrfachkupplung) realisiert. Der Sensorring ist in dem Doppelkupplungsaufbau integriert, um so Ungleichförmigkeiten des Motors (Verbrennungskraftmaschine) bereits durch das vorgeschaltete Zweimassenschwungrad zu filtern, wodurch das Drehzahlsignal nicht negativ beeinflusst wird.

Die Erfindung wird nun nachfolgend anhand von Figuren näher erläutert, in welchem Zusammenhang auch verschiedene Ausführungsbeispiele dargestellt sind.

Es zeigen:

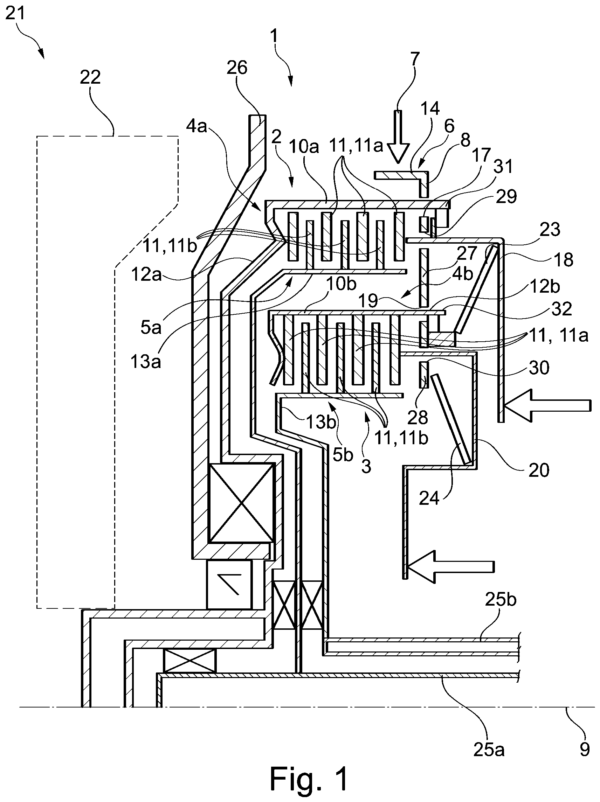

- Fig. 1: eine schematische Längsschnittdarstellung einer erfindungsgemäßen Mehrfachkupplung gemäß einem ersten Ausführungsbeispiel, wobei der Aufbau der gesamten Mehrfachkupplung gut zu erkennen ist,

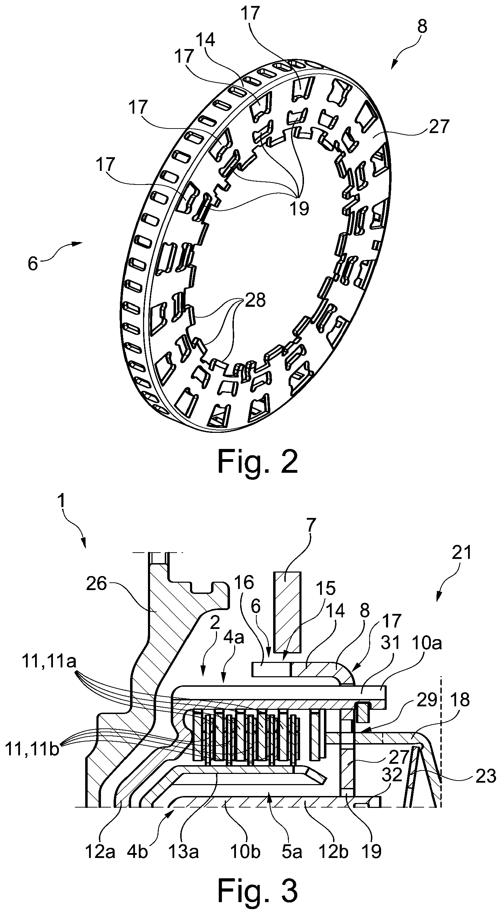

- Fig. 2: eine perspektivische Darstellung eines in Fig. 1 eingesetzten Geberteils zur unmittelbaren Verbindung eines ersten Kupplungsbestandteils einer ersten Kupplung mit einem ersten Kupplungsbestandteil einer zweiten Kupplung, wobei eine an einer radialen Außenseite des Geberteils eingebrachte Drehzahl- und/oder Drehpositionserfassungsgeometrie, die durch mehrere in Umfangsrichtung verteilte Löcher umgesetzt ist, zu erkennen ist,
- Fig. 3: eine detaillierte Längsschnittdarstellung einer erfindungsgemäßen Mehrfachkupplung gemäß einem zweiten Ausführungsbeispiel, wobei die Mehrfachkupplung im Bereich der Drehzahl- und/oder Drehpositionserfassungsgeometrie des Geberteils, die im Betrieb mit einem Sensor in Wirkverbindung steht, zu erkennen ist,

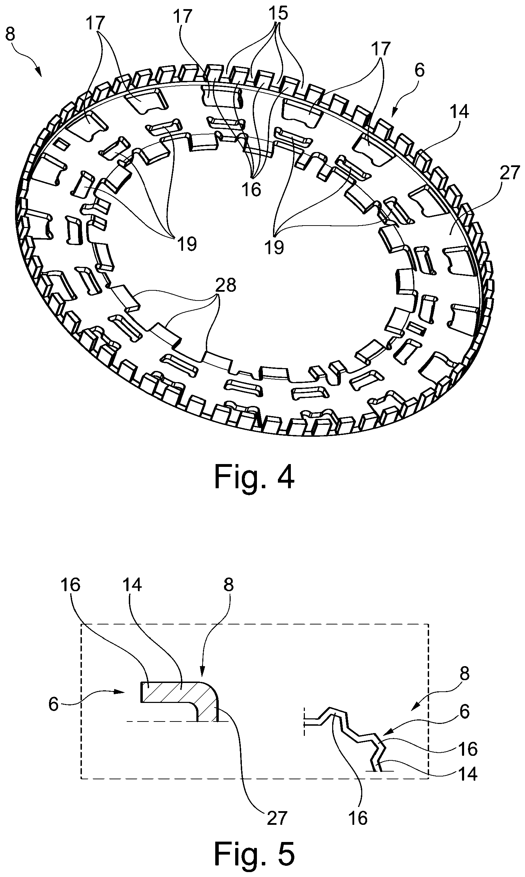

- Fig. 4: eine perspektivische Darstellung des in Fig. 3 eingesetzten Geberteils von einer Seite, zu der mehrere in Umfangsrichtung gleichmäßig verteilt angeordnete, die Drehzahl- und/oder Drehpositionserfassungsgeometrie bildende sowie in axialer Richtung vorspringende Zähne zu erkennen sind,
- Fig. 5: zwei Detaildarstellungen eines Geberteils, wie es in einer erfindungsgemäßen Mehrfachkupplung gemäß einem dritten Ausführungsbeispiel eingesetzt ist, wobei eine linke Teildarstellung der Fig. 5 eine Längsschnittdarstellung des Geberteils im Bereich seiner Drehzahl- und/oder Drehpositionserfassungsgeometrie zeigt, sodass ein als Sicke ausgeformter, radial nach außen vorspringender Zahn der Drehzahl- und/oder Drehpositionserfassungsgeometrie im Schnitt zu erkennen ist, und wobei eine rechte Teildarstellung der Fig. 5 eine Stirnansicht mehrerer dieser Zähne zeigt.

Die Figuren sind lediglich schematischer Natur und dienen ausschließlich dem Verständnis der Erfindung. Die gleichen Elemente sind mit denselben Bezugszeichen versehen. Auch sind die unterschiedlichen Merkmale der verschiedenen Ausführungsbeispiele frei miteinander kombinierbar.

In Fig. 1 ist der prinzipielle Aufbau einer erfindungsgemäßen Mehrfachkupplung 1 zunächst besonders gut zu erkennen. Die Mehrfachkupplung 1 ist in diesem Ausführungsbeispiel als eine Doppelkupplung realisiert; gemäß weiteren Ausführungen ist sie auch als Dreifachkupplung ausgeführt. Die Mehrfachkupplung 1 weist eine erste Kupplung 2 und eine zweite Kupplung 3 auf. Die beiden Kupplungen 2 und 3 sind, entlang eines im Betrieb umgesetzten Drehmomentübertragungswegs gesehen, zwischen einer hier der Übersichtlichkeit halber nicht dargestellten Ausgangswelle einer Verbrennungskraftmaschine und einer Getriebeeingangswelle 25a, 25b eines der Übersichtlichkeit halber nicht näher dargestellten Getriebes eingesetzt. Die Mehrfachkupplung 1 ist daher im Betrieb Bestandteil eines Antriebsstranges eines Kraftfahrzeuges. Die Mehrfachkupplung 1, wie durch gestrichelte Linien in Fig. 1 veranschaulicht, ist in einer bevorzugten Ausführung mit einem Zweimassenschwungrad 22 wirkverbunden. Die als Kupplungsanordnung 21 bezeichnete Anordnung aus Mehrfachkupplung 1 und Zweimassenschwungrad 22 ist dann im Betrieb wiederum gesamtheitlich zwischen der Ausgangswelle der Verbrennungskraftmaschine und den Getriebeeingangswellen 25a, 25b des Getriebes eingesetzt.

Eine Drehachse der Mehrfachkupplung 1, um die die Mehrfachkupplung 1 im Betrieb zumindest teilweise rotiert / rotierbar ist mit dem Bezugszeichen 9 versehen. Die verwendeten Richtungsangaben beziehen sich auf diese Drehachse 9. Folglich ist eine axiale Richtung eine Richtung entlang der Drehachse 9, eine radiale Richtung eine Richtung senkrecht zu der Drehachse 9 und eine Umfangsrichtung eine Tangentialrichtung entlang einer gedachten konzentrisch um die Drehachse 9 herum verlaufenden Kreislinie konstanten Durchmessers.

Die erste Kupplung 2 ist in dieser Ausführung als Reibkupplung, nämlich als eine Reiblamellenkupplung realisiert. Die erste Kupplung 2 ist gemäß weiteren Ausführungen auch als Einscheibenkupplung oder als andere Mehrscheibenkupplung realisiert. Die zweite Kupplung 3 entspricht weitgehend in ihrem Aufbau der ersten Kupplung 2. Die zweite Kupplung 3 ist folglich ebenfalls als Reiblamellenkupplung ausgebildet. Die zweite Kupplung 3 ist jedoch in weiteren Ausführungen, unabhängig von der Ausbildung der ersten Kupplung 2, als eine Einscheibenkupplung oder als eine andere Mehrscheibenkupplung ausgebildet. Die erste Kupplung 2 dient als Koppelelement zwischen der Ausgangswelle / dem Zweimassenschwungrad 22 und einer ersten Getriebeeingangswelle 25a. Die zweite Kupplung 3 dient als Koppelelement zwischen der Ausgangswelle / dem Zweimassenschwungrad 22 und einer zweiten Getriebeeingangswelle 25b. Die Getriebeeingangswellen 25a und 25b sind auf typische Weise radial ineinander geschachtelt angeordnet. In dieser Ausführung ist die zweite Getriebeeingangswelle 25b radial außerhalb der ersten Getriebeeingangswelle 25a angeordnet.

Die erste Kupplung 2 weist einen ersten Kupplungsbestandteil 4a auf. Der erste Kupplungsbestandteil 4a weist weiterhin einen (ersten) Träger 12a auf, der als Außenlamellenträger fungiert. An einem hülsenförmigen (ersten) Verbindungsbereich 10a des ersten Trägers 12a sind mehrere Reibelemente 11 in Form mehrerer erster Reibelemente 11a drehfest sowie axial relativ zueinander verschieblich aufgenommen. Der erste Verbindungsbereich 10a verläuft in axialer Richtung. Die ersten Reibelemente 11a des ersten Kupplungsbestandteils 4a stehen in radialer Richtung nach innen von dem ersten Verbindungsbereich 10a ab.

Die ersten Reibelemente 11a der ersten Kupplung 2 wirken mit mehreren Reibelementen 11 in Form mehrerer zweiter Reibelemente 11b eines zweiten Kupplungsbestandteils 5a der ersten Kupplung 2 zusammen. Die Reibelemente 11a, 11b des ersten Kupplungsbestandteils 4a und des zweiten Kupplungsbestandteils 5a überdecken sich in radialer Richtung und wechseln sich in axialer Richtung gegenseitig ab. Der zweite Kupplungsbestandteil 5a weist zudem einen sich in radialer Richtung nach innen erstreckenden (zweiten) Träger 13a auf. Der zweite Träger 13a ist als ein Innenlamellenträger ausgebildet. Der zweite Träger 13a nimmt die zweiten Reibelemente 11b drehfest sowie axial relativ zueinander verschieblich auf. Die zweiten Reibelemente 11b stehen in radialer Richtung nach außen von dem zweiten Träger 13a ab. Der zweite Träger 13a und folglich der zweite Kupplungsbestandteil 5a ist drehfest mit der ersten Getriebeeingangswelle 25a verbunden.

Da die zweite Kupplung 3 in ihrem Aufbau weitgehend dem Aufbau der ersten Kupplung 2 entspricht, weist auch die zweite Kupplung 3 einen ersten Kupplungsbestandteil 4b auf, der mit einem als Außenlamellenträger ausgebildeten ersten Träger 12b mit mehreren Reibelementen 11 in Form mehrerer erster Reibelemente 11a ausgestattet ist. Die ersten Reibelemente 11a sind drehfest sowie in axialer Richtung relativ zueinander verschieblich an dem ersten Träger 12b aufgenommen. Insbesondere sind an einem hülsenförmigen (zweiten) Verbindungsbereich 10b des ersten Trägers 12b die ersten Reibelemente 11a drehfest sowie axial relativ zueinander verschieblich aufgenommen. Die ersten Reibelemente 11a des ersten Kupplungsbestandteils 4b stehen in radialer Richtung nach innen von dem zweiten Verbindungsbereich 10b ab. Der zweite Verbindungsbereich 10b verläuft in axialer Richtung.

Die ersten Reibelemente 11a des ersten Kupplungsbestandteils 4b wirken mit mehreren Reibelementen 11 in Form mehrerer zweiter Reibelemente 11b eines zweiten Kupplungsbestandteils 5b der zweiten Kupplung 3 zusammen. Die zweiten Reibelemente 11b der beiden Kupplungsbestandteile 4b und 5b sind in axialer Richtung wechselweise angeordnet. Die zweiten Reibelemente 11b des zweiten Kupplungsbestandteils 5b sind in axialer Richtung relativ zueinander verschieblich sowie drehfest an einem zweiten Träger 13b des zweiten Kupplungsbestandteils 5b aufgenommen. Der zweite Träger 13b und folglich der zweite Kupplungsbestandteil 5b ist drehfest mit der zweiten Getriebeeingangswelle 25b verbunden.

Aus Fig. 1 geht weiterhin in Bezug auf den allgemeinen Aufbau der Mehrfachkupplung 1 hervor, dass die beiden Kupplungen 2 und 3 in radialer Richtung geschachtelt angeordnet sind. Demzufolge sind die Reibelemente 11; 11a, 11b der ersten Kupplung 2 radial außerhalb der Reibelemente 11; 11a, 11b der zweiten Kupplung 3 angeordnet. Die Reibelemente 11; 11a, 11b der ersten Kupplung 2 sind des Weiteren (größtenteils) in axialer Richtung auf gleicher Höhe wie die Reibelemente 11; 11a, 11b der zweiten Kupplung 3 angeordnet. Die beiden Verbindungsbereiche 10a, 10b der ersten Kupplung 2 und der zweiten Kupplung 3 überlagern / überdecken / überragen sich folglich in axialer Richtung.

In einer eingekuppelten Stellung der jeweiligen Kupplung 2, 3 sind die Reibelemente 11; 11a, 11b der jeweiligen Kupplung 2, 3 drehfest miteinander verbunden und in einer ausgekuppelten Stellung frei relativ zueinander verdrehbar. Zum Verstellen der jeweiligen Kupplung 2, 3, d.h. zum Verschieben der Reibelemente 11; 11a, 11b zwischen der eingekuppelten und ausgekuppelten Stellung ist je Kupplung 2, 3 ein Druckelement 18, 20 mit einer entsprechenden Betätigungseinheit, die hier der Übersichtlichkeit halber nicht weiter dargestellt ist, mit den jeweiligen Reibelementen 11; 11a, 11b wirkverbunden. Ein erstes Druckelement 18 wirkt auf die axiale Verschiebestellung der Reibelemente 11; 11a, 11b der ersten Kupplung 2 ein; ein zweites Druckelement 20 wirkt auf die axiale Verschiebestellung der Reibelemente 11; 11a, 11b der zweiten Kupplung 3 ein. Die Druckelemente 18, 20 sind in dieser Ausführung jeweils als Drucktöpfe ausgestaltet. Zur Abstützung der Druckelemente 18, 20 in eine Ausgangsstellung (ausgekuppelte Stellung) wirkt auf das jeweilige Druckelement 18, 20 eine Rückstellfeder 23, 24 rückstellend ein.

Erfindungsgemäß ist nun ein Geberteil 8, das gleichzeitig zur Erfassung einer Drehzahl der ersten Kupplungsbestandteile 4a, 4b dient, eingesetzt. Das Geberteil 8 ist in diesem Zusammenhang ein die ersten Kupplungsbestandteile 4a, 4b unmittelbar miteinander drehfest verbindendes Verbindungselement. Das Geberteil 8 verbindet die beiden Verbindungsbereiche 10a, 10b unmittelbar miteinander. Das Geberteil 8 erstreckt sich zwischen den sich in axialer Richtung überdeckenden Verbindungsbereichen 10a, 10b direkt in radialer Richtung.

Das Geberteil 8 der ersten Ausführung ist alleine in Fig. 2 veranschaulicht. Das Geberteil 8 ist gesamtheitlich als ringförmige Scheibe ausgebildet. Das Geberteil 8 weist einen radial außen angeordneten Ringbereich 14 auf. Dieser Ringbereich 14 weist unmittelbar eine Drehzahl- und/oder Drehpositionserfassungsgeometrie 6 auf, die von einem Sensor 7 erfassbar ist. Der Sensor 7 ist in Fig. 1 der Einfachheit halber lediglich als Pfeil dargestellt, der die Messrichtung veranschaulicht. Der Sensor 7 ist im Betrieb bevorzugt in einem Gehäuse 26 der Mehrfachkupplung 1 aufgenommen. Der Sensor 7 kann in weiteren Ausführungen jedoch auch als Bestandteil außerhalb der Mehrfachkupplung 1 ausgebildet sein. Das Geberteil 8 besitzt somit die Funktion eines durch den Sensor 7 zu erfassenden Teils. Das Geberteil 8 ist aufgrund seiner Ausbildung auch als Geberring / Sensorring bezeichnet.

Die Drehzahl- und/oder Drehpositionserfassungsgeometrie 6 weist mehrere in Umfangsrichtung gleichmäßig verteilt angeordnete, in den Ringbereich 14 eingebrachte Löcher 15 auf. Die Löcher 15 sind in regelmäßigen Abständen relativ zueinander beabstandet angeordnet. Die Löcher 15 sind als in radialer Richtung verlaufende Durchgangslöcher in den Ringbereich 14 eingebracht. Die Löcher 15 sind zu beiden voneinander axial abgewandten Seiten begrenzt / geschlossen. Die Löcher 15 weisen größtenteils die gleiche Größe auf, d.h. insbesondere die gleiche radiale Abmessung. Dadurch ist eine Geometrie zur Drehzahlerfassung umgesetzt. Weiter bevorzugt sind ein oder mehrere Löcher 15 auch in ihrer Größe (vorzugsweise Abmessung in Umfangsrichtung) unterschiedlich zu der Größe der übrigen Löchern 15 ausgebildet. Insbesondere ist ein einzelnes Loch 15 aus der Gesamtheit der Löcher 15 größer als die übrigen Löcher 15 ausgebildet, sodass dadurch eine Geometrie zur Drehpositionserfassung der ersten Kupplungsbestandteile 4a und 4b im Betrieb ermöglicht ist. Der Übersichtlichkeit halber ist auf die Darstellung eines weiteren größeren Loches 15 in den Figuren verzichtet.

An den Ringbereich 14 schließt ein sich in radialer Richtung von dem Ringbereich 14 aus nach innen erstreckender Scheibenbereich 27 an. Der Scheibenbereich 27 ist jener Bereich, der die beiden ersten Träger 12a, 12b miteinander verbindet und sich radial zwischen diesen Trägern 12a, 12b / den Verbindungsbereichen 10a, 10b erstreckt. Der Scheibenbereich 27 ist mit dem ersten Träger 12a der ersten Kupplung 2 in Umfangsrichtung formschlüssig verbunden. Der Scheibenbereich 27 weist mehrere in Umfangsrichtung verteilt angeordnete erste Durchgangslöcher 17 auf. In die ersten Durchgangslöcher 17 ragen mehrere in axialer Richtung vorstehende sowie in Umfangsrichtung verteilt angeordnete (erste) Nasen 31 des ersten Verbindungsbereiches 10a / ersten Trägers 12a hinein und sind in Drehrichtung / Umfangsrichtung formschlüssig in diesen ersten Durchgangslöchern 17 abgestützt. Zudem ist der erste Verbindungsbereich 10a / erste Träger 12a in axialer Richtung relativ zu dem Geberteil 8 fest abgestützt.

Der Scheibenbereich 27 ist auch mit dem ersten Träger 12b der zweiten Kupplung 3 in Umfangsrichtung formschlüssig verbunden. Radial innerhalb der entlang einer gedachten Kreislinie angeordneten ersten Durchgangslöcher 17 sind mehrere zweite Durchgangslöcher 19 in Umfangsrichtung verteilt angeordnet. Auch die zweiten Durchgangslöcher 19 sind entlang einer gedachten Kreislinie aneinander aufgereiht angeordnet. In die zweiten Durchgangslöcher 19 ragen mehrere in axialer Richtung vorstehende sowie in Umfangsrichtung verteilt angeordnete (zweite) Nasen 32 des zweiten Verbindungsbereiches 10b / ersten Trägers 12b hinein und sind in Drehrichtung / Umfangsrichtung formschlüssig in diesen zweiten Durchgangslöchern 19 abgestützt. Zudem ist der zweite Verbindungsbereich 10b / erste Träger 12b in axialer Richtung relativ zu dem Geberteil 8 fest abgestützt.

Wie in Fig. 1 ebenfalls angedeutet und in Fig. 2 der Übersichtlichkeit halber nicht weiter ausgebildet, sind weitere (dritte) Durchgangslöcher 29 in dem Scheibenbereich 27 ausgebildet. Durch die dritten Durchgangslöcher 29 ragen in axialer Richtung vorspringende Fortsätze des ersten Druckelementes 18 hindurch, sodass sich das erste Druckelement 18 und mit einem endseitig angeordneten Reibelement 11 der ersten Kupplung 2 in Wirkverbindung befindet. Wie in Fig. 1 ebenfalls angedeutet und in Fig. 2 der Übersichtlichkeit halber nicht weiter ausgebildet, sind weitere (vierte) Durchgangslöcher 30 in dem Scheibenbereich 27 ausgebildet. Durch die vierten Durchgangslöcher 30 ragen in axialer Richtung vorspringende Fortsätze des zweiten Druckelementes 20 hindurch, um mit einem endseitig angeordneten Reibelement 11 der zweiten Kupplung 3 zusammen zu wirken.

An einer radialen Innenseite des Geberteils 8 stehen in radialer Richtung nach innen mehrere entlang des Umfangs verteilt angeordnete Krafteinleitnasen 28 ab. Diese Krafteinleitnasen 28 bilden einen ringförmigen Auflagebereich für die zweite Rückstellfeder 24 seitens des Geberteils 8. Die zweite Rückstellfeder 24 ist dadurch zwischen dem Geberteil 8 und dem zweiten Druckelement 20 axial eingespannt. Auch die erste Rückstellfeder 23 ist zwischen dem Geberteil 8 und dem ersten Druckelement 18 axial eingespannt.

In Verbindung mit den Fign. 3 und 4 ist ein weiteres zweites Ausführungsbeispiel und in Verbindung mit Fig. 5 ein weiteres drittes Ausführungsbeispiel veranschaulicht. Diese weiteren Ausführungsbeispiele entsprechen in ihrem Aufbau sowie ihrer Funktion weitestgehend dem ersten Ausführungsbeispiel der Fign. 1 und 2, weshalb der Kürze wegen nachfolgend lediglich die wesentlichen Unterschiede zu diesem ersten Ausführungsbeispiel beschrieben sind.

In dem zweiten Ausführungsbeispiel der Fign. 3 und 4 ist die Drehzahl- und/oder Drehpositionserfassungsgeometrie 6 anders als im ersten Ausführungsbeispiel ausgestaltet. Hierbei weist der Ringbereich 14 nun eine in axialer Richtung geöffnete Verzahnung auf. Der Ringbereich 14 weist mehrere in gleichmäßigen Abständen in Umfangsrichtung verteilt angeordnete, gleich dimensionierte Zähne 16 auf, die in axialer Richtung vorstehend. Somit sind ebenfalls wiederum Löcher 15 gemäß dem ersten Ausführungsbeispiel realisiert, die in axialer Richtung geöffnet sind.

In Verbindung mit Fig. 5 ist das dritte Ausführungsbeispiel veranschaulicht. Im Vergleich zu dem zweiten Ausführungsbeispiel ist die Verzahnung nun durch eine Sickenstruktur realisiert. Der Ringbereich 14 weist daher mehrere in radialer Richtung nach außen vorstehende Zähne 16 auf. Die Zähne 16 sind in gleichmäßigen Abständen in Umfangsrichtung verteilt angeordnet und gleich dimensioniert. Zwischen den Zähnen 16 bilden sich somit wiederum die nun als Sacklöcher / Vertiefungen ausgebildeten Löcher 15 aus.

In anderen Worten ausgedrückt, werden erfindungsgemäß durch die Integration der Funktion einer Sensorkontur (Geberteil 8) an der Doppelkupplung 1 die Ungleichförmigkeiten des Motors bereits durch das vorgeschaltete Zweimassenschwungrad 22 gefiltert und beeinflussen das Drehzahlsignal nicht negativ. Die Sensorkontur 8 ist dabei an bereits vorhandene Bauteile der Doppelkupplung 1 integriert (ausgeführt als Verbindungselement). Die Geberkontur 8 wird an dem sogenannten Verbindungssteg (Geberteil 8 als Verbindungselement) integriert, welcher die beiden Außenlamellenträger (erste Träger 12a, 12b der ersten Kupplung 2 und der zweiten Kupplung 3) verbindet zur Verfügung gestellt. Dies kann anhand von verschiedenen Varianten erfolgen, bspw. durch Löcher 15, Zähne 16, Klauen, etc. Die Erfindung ist auch auf andere Arten von Kupplungen und/oder Doppelkupplungen übertragbar.

### Bezugszeichenliste

- 1: Mehrfachkupplung
- 2: erste Kupplung
- 3: zweite Kupplung
- 4a: erster Kupplungsbestandteil der ersten Kupplung
- 4b: erster Kupplungsbestandteil der zweiten Kupplung
- 5a: zweiter Kupplungsbestandteil der ersten Kupplung
- 5b: zweiter Kupplungsbestandteil der zweiten Kupplung
- 6: Drehzahl- und/oder Drehpositionserfassungsgeometrie
- 7: Sensor
- 8: Geberteil
- 9: Drehachse
- 10a: Verbindungsbereich der ersten Kupplung
- 10b: Verbindungsbereich der zweiten Kupplung
- 11: Reibelement
- 12a: erster Träger der ersten Kupplung
- 12b: erster Träger der zweiten Kupplung
- 13a: zweiter Träger der ersten Kupplung
- 13b: zweiter Träger der zweiten Kupplung
- 14: Ringbereich
- 15: Loch
- 16: Zahn
- 17: erstes Durchgangsloch
- 18: erstes Druckelement
- 19: zweites Durchgangsloch
- 20: zweites Druckelement
- 21.: Kupplungsanordnung
- 22: Zweimassenschwungrad
- 23: erste Rückstellfeder
- 24: zweite Rückstellfeder
- 25a: erste Getriebeeingangswelle
- 25b: zweite Getriebeeingangswelle
- 26: Gehäuse
- 27: Scheibenbereich
- 28: Krafteinleitnase
- 29: drittes Durchgangsloch
- 30: viertes Durchgangsloch
- 31: erste Nase
- 32: zweite Nase

## Patentansprüche

1. Mehrfachkupplung (1) für einen Antriebsstrang eines Kraftfahrzeuges, mit einer ersten Kupplung (2) und einer zweiten Kupplung (3), wobei jede Kupplung (2, 3) einen ersten Kupplungsbestandteil (4a, 4b) sowie einen, wahlweise mit dem ersten Kupplungsbestanteil (4a, 4b) drehverbindbaren, zweiten Kupplungsbestandteil (5a, 5b) aufweist, sowie mit einem eine Drehzahl- und/oder Drehpositionserfassungsgeometrie (6) aufweisenden, mit einem Sensor (7) in Wirkverbindung stehenden Geberteil (8), **dadurch gekennzeichnet, dass** das Geberteil (8) als ein den ersten Kupplungsbestandteil (4a) der ersten Kupplung (2) mit dem ersten Kupplungsbestandteil (4b) der zweiten Kupplung (3) drehfest verbindendes Verbindungselement (8) eingesetzt ist.

2. Mehrfachkupplung (1) nach Anspruch 1, **dadurch gekennzeichnet, dass** sich das Geberteil (8) zwischen zwei sich in einer axialen Richtung in Bezug auf eine Drehachse (9) der Mehrfachkupplung (1) überdeckenden Verbindungsbereichen (10a, 10b) der ersten Kupplungsbestandteile (4a, 4b) erstreckt.

3. Mehrfachkupplung (1) nach Anspruch 1 oder 2, **dadurch gekennzeichnet, dass** der erste Kupplungsbestandteil (4a) der ersten Kupplung (2) und/oder der erste Kupplungsbestandteil (4b) der zweiten Kupplung (3) einen zumindest ein Reibelement (11) drehfest aufnehmenden Träger (12a, 12b) aufweist und die Träger (12a, 12b) der beiden Kupplungen (2, 3) unmittelbar über das Geberteil (8) miteinander drehfest verbunden sind.

4. Mehrfachkupplung (1) nach einem der Ansprüche 1 bis 3, **dadurch gekennzeichnet, dass** das Geberteil (8) einen die Drehzahl- und/oder Drehpositionserfassungsgeometrie (6) ausbildenden Ringbereich (14) aufweist und der Ringbereich (14) in Bezug auf die Drehachse (9) radial außerhalb des ersten Kupplungsbestandteils (4a) der ersten Kupplung (2) und/oder des ersten Kupplungsbestandteils (4b) der zweiten Kupplung (3) angeordnet ist.

5. Mehrfachkupplung (1) nach einem der Ansprüche 1 bis 4, **dadurch gekennzeichnet, dass** die Drehzahl- und/oder Drehpositionserfassungsgeometrie (6) mehrere in regelmäßigen Abständen entlang einer Umfangsrichtung nebeneinander angeordnete Löcher (15) aufweist.

6. Mehrfachkupplung (1) nach einem der Ansprüche 1 bis 5, **dadurch gekennzeichnet, dass** die Drehzahl- und/oder Drehpositionserfassungsgeometrie (6) mehrere in regelmäßigen Abständen entlang einer Umfangsrichtung nebeneinander angeordnete Zähne (16) aufweist.

7. Mehrfachkupplung (1) nach Anspruch 6, **dadurch gekennzeichnet, dass** die Zähne (16) in Bezug auf die Drehachse (9) in einer axialen Richtung oder einer radialen Richtung nach außen vorstehen.

8. Mehrfachkupplung (1) nach einem der Ansprüche 1 bis 7, **dadurch gekennzeichnet, dass** das Geberteil (8) zumindest ein erstes axiales Durchgangsloch (17) aufweist, in das der erste Kupplungsbestandteil (4a) der ersten Kupplung (2) unter Ausbildung eines Formschlusses drehfest aufgenommen ist.

9. Mehrfachkupplung (1) nach einem der Ansprüche 1 bis 8, **dadurch gekennzeichnet, dass** das Geberteil (8) zumindest ein zweites axiales Durchgangsloch (19) aufweist, in das der erste Kupplungsbestandteil (4b) der zweiten Kupplung (3) unter Ausbildung eines Formschlusses drehfest aufgenommen ist.

10. Kupplungsanordnung (21) mit einer Mehrfachkupplung (1) nach einem der Ansprüche 1 bis 9 und einem Zweimassenschwungrad (22), wobei ein Primärteil des Zweimassenschwungrades (22) zur drehfesten Verbindung mit einer Ausgangswelle einer Verbrennungskraftmaschine vorbereitet ist und ein mit dem Primärteil drehschwingungsgedämpft verbundenes Sekundärteil mit dem ersten Kupplungsbestandteil (4a) der ersten Kupplung (2) und/oder drehfest mit dem ersten Kupplungsbestandteil (4b) der zweiten Kupplung (3) drehfest verbunden ist.

## Claims

1. A multiple clutch (1) for a drive train of a motor vehicle, having a first clutch (2) and a second clutch (3), wherein each clutch (2, 3) has a first clutch component (4a, 4b) and a second clutch component (5a, 5b), which can optionally be rotatably connected to the first clutch component (4a, 4b), and having an encoder part (8), which has a rotational speed and/or rotational position detection geometry (6) and is operatively connected to a sensor (7), **characterized in that** the encoder part (8) is used as a connecting element (8), which connects the first clutch component (4a) of the first clutch (2) to the first clutch component (4b) of the second clutch (3) in a non-rotatable manner.

2. The multiple clutch (1) according to claim 1, **characterized in that** the encoder part (8) extends between two connecting regions (10a, 10b) of the first clutch components (4a, 4b) overlapping in an axial direction with respect to an axis of rotation (9) of the multiple clutch (1).

3. The multiple clutch (1) according to claim 1 or 2, **characterized in that** the first clutch component (4a) of the first clutch (2) and/or the first clutch component (4b) of the second clutch (3) has a carrier (12a, 12b), which receives at least one friction element (11) in a non-rotatable manner, and the carriers (12a, 12b) of the two clutches (2, 3) are directly connected to one another in a non-rotatable manner via the encoder part (8).

4. The multiple clutch (1) according to any one of claims 1 to 3, **characterized in that** the encoder part (8) has a ring region (14) forming the rotational speed and/or rotational position detection geometry (6), and the ring region (14) is arranged radially outside the first clutch component (4a) of the first clutch (2) and/or the first clutch component (4b) of the second clutch (3) with respect to the axis of rotation (9).

5. The multiple clutch (1) according to any one of claims 1 to 4, **characterized in that** the rotational speed and/or rotational position detection geometry (6) has multiple holes (15) arranged side by side at regular intervals along a circumferential direction.

6. The multiple clutch (1) according to any one of claims 1 to 5, **characterized in that** the rotational speed and/or rotational position detection geometry (6) has multiple teeth (16) arranged side by side at regular intervals along a circumferential direction.

7. The multiple clutch (1) according to claim 6, **characterized in that** the teeth (16) project outward with respect to the axis of rotation (9) in an axial direction or a radial direction.

8. The multiple clutch (1) according to any one of claims 1 to 7, **characterized in that** the encoder part (8) has at least a first axial through hole (17), in which the first clutch component (4a) of the first clutch (2) is received in a non-rotatable manner, forming a form fit.

9. The multiple clutch (1) according to any one of claims 1 to 8, **characterized in that** the encoder part (8) has at least a second axial through hole (19), in which the first clutch component (4b) of the second clutch (3) is received in a non-rotatable manner, forming a form fit.

10. A clutch arrangement (21) having a multiple clutch (1) according to any one of claims 1 to 9 and a dual-mass flywheel (22), wherein a primary part of the dual-mass flywheel (22) is prepared for a connection to an output shaft of an internal combustion engine in a non-rotatable manner, and a secondary part connected to the primary part in a torsional vibration-damped manner is connected to the first clutch component (4a) of the first clutch (2) and/or to the first clutch component (4b) of the second clutch (3) in a non-rotatable manner.

## Revendications

1. Embrayage multiple (1) pour une chaîne cinématique d'un véhicule automobile, comportant un premier embrayage (2) et un second embrayage (3), dans lequel chaque embrayage (2, 3) comporte un premier composant d'embrayage (4a, 4b) ainsi qu'un second composant d'embrayage (5a, 5b), pouvant être sélectivement relié en rotation au premier composant d'embrayage (4a, 4b), ainsi que comportant un élément émetteur (8) présentant une géométrie de détection de vitesse de rotation et/ou de position de rotation (6) en liaison fonctionnelle avec un capteur (7), **caractérisé en ce que** l'élément émetteur (8) est utilisé comme élément de liaison (8) reliant de manière solidaire en rotation le premier composant d'embrayage (4a) du premier embrayage (2) au premier composant d'embrayage (4b) du second embrayage (3).

2. Embrayage multiple (1) selon la revendication 1, **caractérisé en ce que** l'élément émetteur (8) s'étend entre deux zones de liaison (10a, 10b) des premiers composants d'embrayage (4a, 4b) se chevauchant dans une direction axiale par rapport à un axe de rotation (9) de l'embrayage multiple (1).

3. Embrayage multiple (1) selon la revendication 1 ou 2, **caractérisé en ce que** le premier composant d'embrayage (4a) du premier embrayage (2) et/ou le premier composant d'embrayage (4b) du second embrayage (3) comporte un support (12a, 12b) logeant de manière solidaire en rotation au moins un élément de friction (11) et les supports (12a, 12b) des deux embrayages (2, 3) sont reliés l'un à l'autre de manière solidaire en rotation directement par l'intermédiaire de l'élément émetteur (8).

4. Embrayage multiple (1) selon l'une quelconque des revendications 1 à 3, **caractérisé en ce que** l'élément émetteur (8) comporte une zone annulaire (14) formant la géométrie de détection de vitesse de rotation et/ou de position de rotation (6) et la zone annulaire (14) est disposée radialement par rapport à l'axe de rotation (9) à l'extérieur du premier composant d'embrayage (4a) du premier embrayage (2) et/ou du premier composant d'embrayage (4b) du second embrayage (3).

5. Embrayage multiple (1) selon l'une quelconque des revendications 1 à 4, **caractérisé en ce que** la géométrie de détection de vitesse de rotation et/ou de position de rotation (6) comporte une pluralité de trous (15) disposés juxtaposés les uns aux autres à intervalles réguliers le long d'une direction circonférentielle.

6. Embrayage multiple (1) selon l'une quelconque des revendications 1 à 5, **caractérisé en ce que** la géométrie de détection de vitesse de rotation et/ou de position de rotation (6) comporte une pluralité de dents (16) disposées juxtaposées les unes aux autres à intervalles réguliers le long d'une direction circonférentielle.

7. Embrayage multiple (1) selon la revendication 6, **caractérisé en ce que** les dents (16) font saillie vers l'extérieur par rapport à l'axe de rotation (9) dans une direction axiale ou dans une direction radiale.

8. Embrayage multiple (1) selon l'une quelconque des revendications 1 à 7, **caractérisé en ce que** l'élément émetteur (8) comporte au moins un premier trou traversant (17) axial dans lequel le premier composant d'embrayage (4a) du premier embrayage (2) est logé solidaire en rotation en formant une liaison par complémentarité de forme.

9. Embrayage multiple (1) selon l'une quelconque des revendications 1 à 8, **caractérisé en ce que** l'élément émetteur (8) comporte au moins un second trou traversant (19) axial dans lequel le premier composant d'embrayage (4b) du second embrayage (3) est logé solidaire en rotation en formant une liaison par complémentarité de forme.

10. Agencement d'embrayage (21) comportant un embrayage multiple (1) selon l'une quelconque des revendications 1 à 9 et un volant bimasse (22), dans lequel une partie primaire du volant bimasse (22) est conçue pour être reliée de manière solidaire en rotation à un arbre de sortie d'un moteur à combustion interne et une partie secondaire, reliée de manière à amortir des vibrations de torsion à la partie primaire, est reliée de manière solidaire en rotation au premier composant d'embrayage (4a) du premier embrayage (2) et/ou au premier composant d'embrayage (4b) du second embrayage (3).
